# EUROPÄISCHE PATENTSCHRIFT

(11) **EP 3 786 070 B1**
(45) Veröffentlichungstag und Bekanntmachung des Hinweises auf die Patenterteilung: **28.12.2022**
(21) Anmeldenummer: 20191114.6
(22) Anmeldetag: 14.08.2020
(51) Int. Cl.: B64F 5/40, B64D 11/00

(54) **VERFAHREN ZUR BRANDQUALIFIZIERUNG VON LUFTFAHRZEUGKABINENERSATZBAUTEILEN**
METHOD FOR FIRE QUALIFYING AIR VEHICLE CABIN REPLACEMENT COMPONENTS
PROCÉDÉ DE QUALIFICATION AU FEU DES ÉLÉMENTS DE REMPLACEMENT DES CABINES D'AÉRONEF

(30) Priorität: 27.08.2019 DE 102019212848
(43) Veröffentlichungstag der Anmeldung: 03.03.2021
(73) Patentinhaber: Lufthansa Technik AG, 22335 Hamburg (DE)
(72) Erfinder: SARBAJNA-ALPERT, Monika, 20535 Hamburg (DE); NASS, Tim, 64546 Mörfelden-Walldorf (DE); ALBERT, Bernd, 64297 Darmstadt (DE); SCHULZE, Malte, 65468 Trebur (DE); CHRISTAN, Rudolf, 22175 Hamburg (DE); WENER, Dietmar, 55278 Ludwigshöhe (DE); LINDERMANN, Folker, 24558 Henstedt-Ulzburg (DE); REIFFERSCHEID, Moritz, 21483 Basedow (DE); WAGNER, Dennis, 22850 Norderstedt (DE)
(74) Vertreter: Müller Verweyen

(56) Entgegenhaltungen:
- Susan J.M. Cabler: "Advisory Circular Subject: Flammability Testing of Aircraft Date: June 4, 2012 AC No: 20-178 Cabin Interior Panels After Alterations Initiated by: AIR-120", , 4. Juni 2012 (2012-06-04), XP055764571, Gefunden im Internet: URL:https://www.faa.gov/documentLibrary/me dia/Advisory_Circular/AC_20-178.pdf [gefunden am 2021-01-13]
- Markus Görnemann: "J-News", , 1. Februar 2019 (2019-02-01), XP055764621, Gefunden im Internet: URL:https://www.easa.europa.eu/sites/defau lt/files/dfu/EASA_J_NEWS_2019-02.pdf [gefunden am 2021-01-13]
- Timothy Marker: "Heat Release and Flammability Testing of Surrogate Panels", , 1. Dezember 2001 (2001-12-01), XP055764584, Gefunden im Internet: URL:https://citeseerx.ist.psu.edu/viewdoc/ download?doi=10.1.1.79.3744&rep=rep1&type= pdf [gefunden am 2021-01-13]

## Beschreibung

Die vorliegende Erfindung betrifft ein Verfahren zur allgemeinen Brandqualifizierung von Oberflächenreparaturverfahren von Kabinenbauteilen von Luftfahrzeugen.

Bei Kabinenbauteilen für Luftfahrzeuge kann es immer wieder zu Beschädigungen kommen, insbesondere an den innen liegenden, in die Kabine weisenden Oberflächen. Beispielsweise entstehen häufig Stoß- und Kratzschäden. Diese Schäden sind oftmals örtlich begrenzt, so dass nur Teile der Kabinenbauteile ersetzt oder repariert werden müssen.

Für eine sichere Verwendung von Kabinenbauteilen im Luftverkehrsbetrieb werden durch die entsprechenden Behörden verschiedene luftfahrtrechtliche Anforderungen formuliert, die die Sicherheit des Passagiers insbesondere auch im Bereich des Brandschutzes sicherstellen sollen. Daher müssen strenge Brandschutzvorgaben erfüllt werden, insbesondere für Kabinenbauteile, die in Luftfahrzeugen für den Passagierluftverkehr verbaut sind, wie beispielsweise Wandverkleidungen. Aus diesem Grund ist es ebenfalls vorgeschrieben, dass Reparaturverfahren für beschädigte Kabinenbauteile einem Brandqualifizierungsverfahren unterliegen. Das gilt auch für örtlich begrenzte Oberflächenreparaturen an Kabineninnenraumbauteilen.

Der derzeit angewandte Standard ist ein Qualifizierungsverfahren, bei dem wenn möglich immer der Originalaufbau eines Bauteils auf sein Brandverhalten getestet wird. Dabei ist der Aufbau eines Bauteils für den Reparaturbetrieb in der Regel nicht bekannt und kann selbst bei Bauteilen der gleichen Art von Flugzeug zu Flugzeug unterschiedlich sein. Das bedeutet, dass für jedes Reparaturverfahren und jeden mit diesem Verfahren reparierten Aufbau ein eigener Brandtest durchgeführt wird. Dabei muss also stets mindestens eine Probe des Originalaufbaus für die Brandqualifizierung zerstört werden. Die Reparatur ist dann brandqualifiziert, wenn das Brandverhalten der reparierten Probe des Originalaufbaus die Anforderungen des jeweiligen Brandtests erfüllt.

Gerade bei der Überholung von Innenraumbauteilen ist jedoch oftmals keine Probe des Originalaufbaus vorhanden oder muss mit zusätzlichem Kosten- und Zeitaufwand nachbeschafft werden.

Bei allen bislang verwendeten Lösungen ist also ein auf den jeweiligen Bauteilaufbau zugeschnittener Brandnachweis erforderlich, unabhängig davon, ob das Reparaturverfahren überhaupt einen Einfluss auf das Brandverhalten hat.

Susan J.M. Cabler: "Advisory Circular; Subject: Flammability Testing of Aircraft Cabin Interior Panels After Alterations"; 4. Juni 2012 offenbart ein Verfahren zum Testen von Kabinenbauteilen eines Flugzeugs. Gemäß dem dort vorgeschlagenen Verfahren kann unter bestimmten Voraussetzungen ein Ersatzpanel anstelle eines Originalpanels einem Brandtest unterzogen werden.

Vor diesem Hintergrund liegt der Erfindung die Aufgabe zugrunde ein Qualifizierungsverfahren für Reparaturverfahren von Kabineninnenbauteilen bereitzustellen, das, bei einer Verringerung der einzelnen Brandtests und Vermeidung von Zerstörung von Originalbauteilen, eine sichere Brandqualifizierung ermöglicht.

Zur Lösung der Aufgabe wird erfindungsgemäß ein Verfahren zur Brandqualifizierung mit den Merkmalen des Anspruchs 1 vorgeschlagen. Weitere bevorzugte Weiterentwicklungen sind den Unteransprüchen, den Figuren und der zugehörigen Beschreibung zu entnehmen.

Gemäß dem Grundgedanken der Erfindung wird vorgeschlagen, unabhängig vom Aufbau des zu reparierenden Bauteils für bestimmte Oberflächenmaterialgruppen, beispielsweise Leder, Kunststoff, Lack, Eloxal, einen allgemeingültigen Brandtest durchzuführen und für diesen Anwendungsfall das Reparaturverfahren zu qualifizieren. So wird beispielsweise ein bestimmtes Reparaturverfahren für die Materialgruppe Leder qualifiziert und ist dann unabhängig vom Aufbau des jeweils zu reparierenden Bauteils für diese Materialgruppe anwendbar. Dazu wird nachgewiesen, dass das Reparaturverfahren erstens nicht zu einer unvorhersehbaren Veränderung des Brandverhaltens eines neutralen Trägermaterials mit vorhersehbarem Brandverhalten führt. Zweitens muss das Reparaturverfahren für einen typischen Bauteilaufbau und eine Mehrzahl von Repräsentanten der Materialgruppe die Anforderungen des erforderlichen Brandtests bestehen. Gelingen beide Nachweise, so kann darauf geschlossen werden, dass das Reparaturverfahren die Brandeigenschaften aller Mitglieder einer Materialgruppe nicht signifikant im Sinne der Brandschutzanforderungen verschlechtert, wenn die Veränderung des Brandverhaltens der Aufbauten mit den Repräsentanten der Materialgruppe grundsätzlich der Veränderung des Brandverhaltens des neutralen Trägermaterials entspricht.

Für das Qualifizierungsverfahren für Oberflächenreparaturverfahren für eine Oberflächenmaterialgruppe von Kabinenbauteilen, sind erfindungsgemäß folgende Schritte vorgesehen. Zunächst werden mindestens zwei Probensätze aus Nachbauten des zu reparierenden Aufbaus mit mindestens einem Repräsentanten der untersuchten Oberflächenmaterialgruppe bereit gestellt sowie mindestens zwei Probensätze mit einem neutralen Trägerwerkstoff. Auf jeweils einen Probensatz des Aufbaus und einen Probensatz des neutralen Trägers wird das zu qualifizierende Reparaturverfahren angewendet. Anschließend wird ein standardisierter Brandtest mit allen vier Probensätzen durchgeführt. Anschließend werden die Brandtests analysiert. Das Reparaturverfahren wird dabei qualifiziert, wenn das Brandverhalten von Proben des zu reparierenden Aufbaus ohne Reparatur, Proben des zu reparierenden Aufbaus mit Reparatur, Trägerproben ohne Reparatur und Trägerproben mit Reparatur die Vorgaben des standardisierten Brandtests erfüllt und das Brandverhalten der Proben des zu reparierenden Aufbaus mit Reparatur und der Trägerproben mit Reparatur sich nicht signifikant von dem Brandverhalten der Proben des zu reparierenden Aufbaus ohne Reparatur und der Trägerproben ohne Reparatur unterscheidet.

Nicht signifikant unterschiedlich im Sinne der Erfindung bedeutet, dass sich das Brandverhalten, beispielsweise die Nachbrenndauer T und Brandlänge L, der reparierten Proben um nicht mehr als 20 Prozent von dem Brandverhalten der unreparierten Proben unterscheiden darf.

Der Vorteil der vorgeschlagenen Lösung ist darin zu sehen, dass die Brandqualifizierung einer einzelnen Schicht anhand eines vergleichenden Tests im Gegensatz zu bauteilbezogenen Brandqualifizierungen eines identischen Aufbaus durchgeführt werden kann. Unbekannte Aufbauten lassen sich dadurch ohne Zerstörung eines Vergleichsbauteils reparieren. Dadurch wird der Fokus von der Brandqualifizierung eines jeden einzelnen reparierten Bauteils auf eine allgemeingültige Brandqualifizierung eines gesamten Reparaturverfahrens verschoben, wodurch reparierte Bauteile die mit dem qualifizierten Reparaturverfahren repariert worden sind, keiner weiteren Brandtests mehr bedürfen. Mit dem erfindungsgemäßen Verfahren wird gezeigt, dass das Brandverhalten durch die Veränderung des repräsentativen Querschnitts, herbeigeführt durch das Reparaturverfahren, nicht verändert wird. Konkret kann so im Bereich der Wartung ein erheblicher wirtschaftlicher Vorteil gewonnen werden.

Vorzugsweise können die Brandtests mehrfach mit einer Vielzahl von identischen Proben durchgeführt werden. So kann die Qualifizierung auf einer statistischen Auswertung der Testergebnisse der identischen Proben beruhen. Zwei identische Proben zeigen kein exakt gleiches Brandverhalten. Daher kann durch eine Vielzahl identischer Proben ein Mittelwert sowie die statistische Abweichung der einzelnen Proben ermittelt werden. Eine Qualifizierung, die auf der gesamten Bandbreite der Testergebnisse basiert, ist daher vorteilhaft.

Eine wesentliche Zielsetzung der Erfindung ist die Charakterisierung eines geeigneten neutralen Trägermaterials. Der neutrale Träger hat nichts mit dem Oberflächenmaterial der Materialgruppe gemein, für die die Qualifizierung durchgeführt wird. Er wird verwendet, um eine standardisierte reproduzierbare Eigenschaft des Untergrunds für das Reparaturverfahren sicherzustellen. So kann im Vergleich zu den Brandproben des zu reparierenden Aufbaus festgestellt werden, ob der zu reparierende Aufbau einen Einfluss auf das Brandverhalten in Kombination mit dem Reparaturverfahren hat. Weil Originalbauteile nicht immer beschafft werden können, beziehungsweise die Zerstörung von Originalbauteilen vermindert werden soll, kann mit einem geeigneten, qualifizierten Trägermaterial unabhängig von den Originalbauteilen, eine ganze Materialgruppe brandqualifiziert werden.

Als ein vorteilhaftes mögliches Trägermaterial hat sich ein Glaslaminat gezeigt. Vorzugsweise umfasst das Glaslaminat ein Glasgewebe mit Phenolharz. Weiter bevorzugt weist das Glaslaminat einen Harzanteil von 40 % und eine Flächenmasse von 470 bis 510 g/m² auf.

Als derzeit gültige Vorschrift für derartige Brandtests wird die Bauvorschrift CS 25.853 verwendet. Darin ist es unter anderem vorgeschrieben, dass ein 12 Sekunden dauernder vertikaler Brandtest oder ein 60 Sekunden dauernder vertikaler Brandtest zu absolvieren sind. In beiden Fällen darf die Nachbrenndauer T nicht länger als 15 Sekunden (Tmax) dauern. Weiterhin darf die Brandlänge L maximal 200 mm (Lmax) (12-Sekunden-Test) beziehungsweise 150 mm (Lmax) (60-Sekunden-Test) nicht überschreiten.

Vorzugsweise wird ein Reparaturverfahren nur dann brandqualifiziert, wenn das gemessene Brandverhalten einen Sicherheitsabstand zu dem maximal erlaubten Brandverhalten zeigt. Bei einem der standardisierten Brandtests, der eine maximal erlaubte Nachbrenndauer Tmax und eine maximale erlaubte Brandlänge Lmax definiert, wird das Reparaturverfahren brandqualifiziert, wenn die im Rahmen des Brandtests gemessene Nachbrennzeit T(Probe) und Brandlänge L(Probe) den Wert Tmax geteilt durch einen Sicherheitswert S und Lmax geteilt durch einen Sicherheitswert S nicht überschreitet, wobei ein Sicherheitswert S bevorzugt zwischen 1,2 und 2,0 liegt. Weiter bevorzugt liegt der Sicherheitswert S zwischen 1,4 und 1,6 und am meisten bevorzugt beträgt der Sicherheitswert S 1,5. Damit wird sichergestellt, dass die Brandwerte signifikant unterhalb der maximal erlaubten Werte des Brandtests liegen. Der bevorzugte Sicherheitswert von 1,5 führt daher dazu, dass die gemessenen Brandwerte alle innerhalb der unteren zwei Drittel des Maximalwertes liegen und somit die statistische Varianz der Brandproben kompensiert werden kann. Bei einer maximal erlaubten Nachbrenndauer von 15 Sekunden und einem Sicherheitswert von 1,5 bedeutet das, dass die Mittelwerte der gemessenen Brenndauern nicht länger als 10 Sekunden betragen dürfen, damit das Reparaturverfahren brandqualifiziert werden kann.

Ein Reparaturverfahren wird qualifiziert, wenn die im Rahmen eines standardisierten Brandtests gemessenen Nachbrennzeiten T und Brandlängen L der reparierten Proben sich nicht um mehr als 20 Prozent des Maximalwertes im Vergleich zu den Proben ohne Reparatur verlängern. So kann festgestellt werden, ob neben den aufgebrachten Materialgruppen auch der Untergrund, also die Originalprobe und das Trägermaterial Einfluss auf das Brandverhalten in Kombination mit dem Reparaturverfahren hat. Bei einer maximal erlaubten Nachbrenndauer von 15 Sekunden bedeutet das, dass die reparierte Probe eine um 3 Sekunden längere Nachbrenndauer als die nicht reparierte Probe aufweisen kann, wobei die 15 Sekunden selbstverständlich nicht überschritten werden dürfen.

Mit dem erfindungsgemäßen Verfahren kann somit gezeigt werden, dass das Brandverhalten durch die Veränderung des repräsentativen Querschnitts, der durch das Reparaturverfahren herbeigeführt wurde, nicht verändert wird. Sind die erfolgten Brandtests erfolgreich und das untersuchte Reparaturverfahren ist für die untersuchte Oberflächenmaterialgruppe erfolgreich brandqualifiziert, kann das Reparaturverfahren anschließend ohne weitere Qualifizierung eines Originalbauteils angewendet werden.

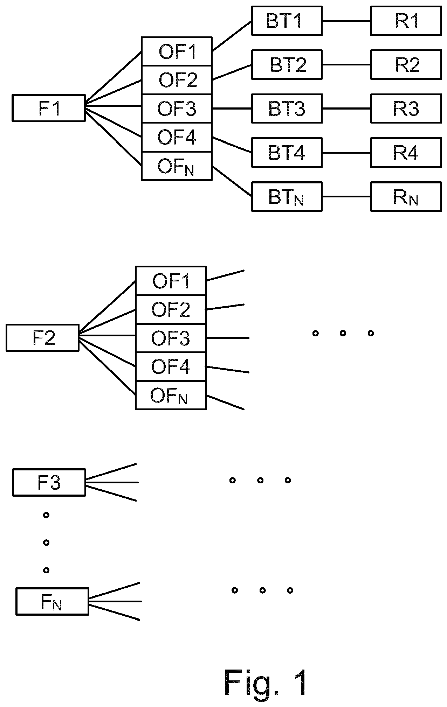

Die Erfindung wird im Folgenden anhand bevorzugter Ausführungsformen unter Bezugnahme auf die beigefügten Figuren erläutert. Dabei zeigt
- Fig. 1: schematisch das Prinzip des Qualifizierungsverfahrens nach dem Stand der Technik;

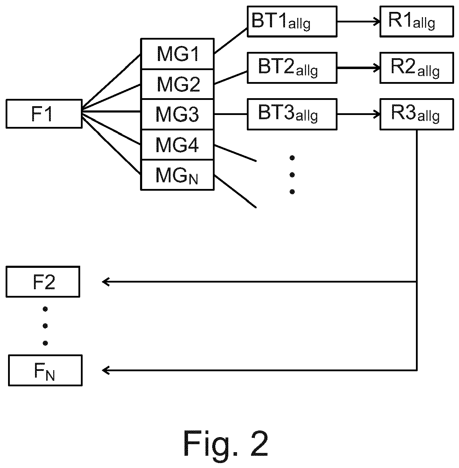

- Fig. 2: schematisch das Prinzip des erfindungsgemäßen Qualifizierungsverfahrens;
- Fig. 3: Brandtests für ein Reparaturverfahren mit einem ersten Material einer bestimmten Oberflächenmaterialgruppe;
- Fig. 4: Brandtests für ein Reparaturverfahren mit einem zweiten Material einer bestimmten Oberflächenmaterialgruppe;
- Fig. 5: Brandtests für ein Reparaturverfahren mit einem dritten Material einer bestimmten Oberflächenmaterialgruppe;

Gemäß dem Stand der Technik muss für jedes Flugzeug F1, F2, F3, Fn und für jedes reparierte Bauteil mit Oberfläche OF1, OF2, OF3, OF4, OFn ein eigener Brandtest BT1, BT2, BT3, BT4, BTn für die jeweilige Reparatur R1, R2, R3, R4, Rn dieser Oberfläche OF durchgeführt werden. Dementsprechend sind zahlreiche aufwendige Brandtests BT unter Zerstörung von Originalbauteilen erforderlich.

Nach dem erfindungsgemäßen Verfahren kann unabhängig vom Flugzeug F für bestimmte Oberflächenmaterialgruppen MG, beispielsweise Leder, Kunststoff, Lack, Eloxal, ein allgemeingültiger Brandtest BT_allg für diese Oberflächenmaterialgruppe MG durchgeführt werden und für diesen Anwendungsfall das Reparaturverfahren R_allg brandqualifiziert werden. So wird beispielsweise ein bestimmtes Reparaturverfahren R für die Materialgruppe MG Leder qualifiziert und ist dann, unabhängig vom Flugzeug F und von den individuellen reparierten Bauteilen, bzw. Oberflächen OF, für diese Materialgruppe MG anwendbar.

Dabei ist vorgesehen, dass das Reparaturverfahren R getrennt von den bauteilspezifischen Oberflächen OF nachgewiesen wird. Dieser Nachweis sieht vor, dass ein neutraler Trägerwerkstoff gefunden und akzeptiert wird, auf dem dann zukünftige Reparaturverfahren R für die Materialgruppe MG abgeprüft werden können. Der neutrale Trägerwerkstoff wird dann akzeptiert, wenn die Größen, die sein Brandverhalten charakterisieren eine geringe Varianz aufweisen und das Brandverhalten dadurch als reproduzierbar anzusehen ist. Außerdem muss der neutrale Trägerwerkstoff ohne Reparatur den allgemeingültigen Brandtest BT_allg bestehen. Um den Nachweis anzutreten, dass das Reparaturverfahren für die Materialgruppe MG nicht zu einer signifikanten negativen Änderung des Brandverhaltens führt, werden die Probensätze des neutralen Trägerwerkstoffes und die Probensätze des zu reparierenden Aufbaus mit den Repräsentanten der Materialgruppe MG ohne und mit Reparatur gebrannt.

Dafür werden sowohl die Probensätze A und A_rep aus Proben des zu reparierenden Aufbaus ohne und mit Reparatur, als auch die Probensätze B und B_rep aus Trägerproben ohne und mit Reparatur erstellt. In der Regel handelt es sich bei dem Reparaturverfahren um die Reparatur eines kleinen Bereichs der Originaloberfläche, beispielsweise eine Lackierarbeit an einer verschlissenen Stelle. Wenn das Reparaturverfahren R jedoch für den Test angewendet wird, so werden sowohl A_rep als auch B_rep vollflächig mit je nach Reparaturverfahren benötigtem Reparaturmaterial beschichtet, somit kann sichergestellt werden, dass auch wirklich die Flamme an einer reparierten Stelle angreift.

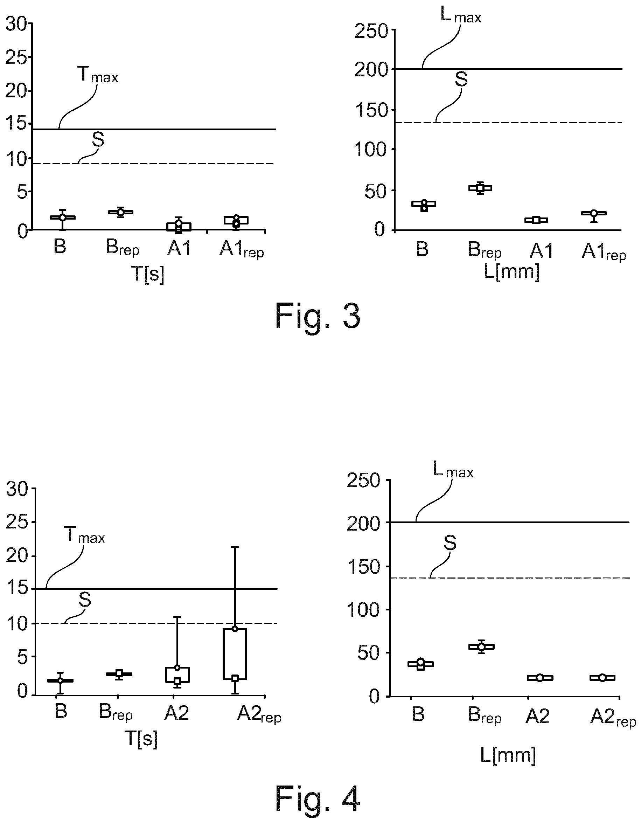

Die Ergebnisse eines Beispiels für ein erfindungsgemäßes Qualifizierungsverfahren für eine Oberflächenmaterialgruppe sind in den Figuren 3 bis 5 dargestellt. Dabei wurden Brandtests gemäß der Brandvorschrift CS 25.853 durchgeführt. Die Vorschrift verlangt unter anderem einen Vertikalbrand, bei dem die maximale Nachbrenndauer T_max der Probe 15 Sekunden, die maximale Brandlänge L_max 200 mm und die Nachtropfbrenndauer 3 Sekunden (Tropfen dürfen maximal 3 Sekunden nach dem Abtropfen brennen) betragen darf.

Die Nachbrenndauer T und die Brandlänge L dürfen sich nicht signifikant unterscheiden im Vergleich zwischen der Originalkomponente und der reparierten Komponente. Das bedeutet, dass die Mittelwerte der beiden Zustände sich nicht um mehr als 20 Prozent des durch die Brandvorschrift maximal erlaubten Wertes unterscheiden dürfen. In absoluten Zahlen bedeutet das beispielsweise eine drei Sekunden längere Nachbrenndauer. Weiterhin sollten die Mittelwerte der Testmessungen signifikant unterhalb der durch den Brandtest vorgegebenen maximalen Werte liegen. Daher wird ein Sicherheitswert S festgelegt. In dem gezeigten Beispiel beträgt der Sicherheitswert S bevorzugt 1,5. Dadurch wird die Varianz der Materialien und deren leicht unterschiedliches Brandverhalten kompensiert. Dieser Wert führt dazu, dass die gemessenen Mittelwerte innerhalb der unteren zwei Drittel des maximal erlaubten Wertes liegen müssen, um eine Qualifizierung zu erhalten.

In dem gezeigten Beispiel wurden Repräsentanten der Oberflächenmaterialgruppe Leder untersucht. Dabei wurden drei verschiedene als Oberflächenverkleidung in Flugzeugkabinen genutzte Lederarten verwendet. Dabei wurden für jede Lederart mehrere Originalproben ohne Reparatur A1, A2, A3 und mit Reparatur Al_rep, A2_rep, A3_rep genutzt, um eine statistische Auswertung zu ermöglichen. Ebenfalls wurden eine neutrale Trägerprobe ohne Reparatur B und mit Reparatur B_rep bereitgestellt. Als neutrales Trägermaterial wurde ein dünnes Glaslaminat (Glasgewebe mit Phenolharz) verwendet. In dem gezeigten Ausführungsbeispiel besteht das Glaslaminat aus zwei vorimprägnierten Fasergeweben mit 40 Prozent Phenolharzanteil und einer Flächenmasse von 470 bis 510 g/m². Das Material des neutralen Trägerwerkstoffes ist jedoch nicht auf ein derartiges Glaslaminat beschränkt. Auch andere geeignete Materialien können verwendet werden. Dabei hat der neutrale Trägerwerkstoff nichts mit dem Originalmaterial gemein. Er wird verwendet um eine reproduzierbare Eigenschaft des Untergrunds für das Reparaturverfahren sicherzustellen. So kann im Vergleich zu den Originalbrandproben festgestellt werden, ob das Originalmaterial einen Einfluss auf das Brandverhalten in Kombination mit dem Reparaturverfahren hat.

Wenn also drei verschiedenen Lederarten als Repräsentanten für die Oberflächenmaterialgruppe herangezogen werden, werden mindestens (3+1)×2=8 Probensätze benötigt. Drei Originallederprobensätze und ein neutraler Trägerprobensatz, jeweils repariert und unrepariert.

Nach dem Brandtest werden die Messwerte der Proben verglichen. Die reparierten Originalproben Al_rep, A2_rep, A3_rep werden mit den unreparierten Originalproben A1, A2, A3 für jeden Repräsentanten, also hier für jede Lederart, und die reparierten Trägerproben B_rep mit den unreparierten Trägerproben B verglichen. Bei beiden Vergleichen darf sich das Brandverhalten der reparierten Proben nicht signifikant von dem Brandverhalten der nicht reparierten Brandproben unterscheiden.

Im Ergebnis kann das untersuchte Reparaturverfahren R_allg für eine bestimmte Oberflächenmaterialgruppe MG qualifiziert werden, wenn die Grenzwerte der Brandvorschrift (mit Sicherheitswert S, also etwa zwei Drittel der maximalen Grenzwerte) eingehalten werden und es keine signifikante Unterscheidung der reparierten und unreparierten Proben gibt.

Ist das der Fall, kann das Reparaturverfahren R_allg zukünftig ohne Qualifizierung des Originalbauteils angewendet werden.

Die Figuren 3 bis 5 zeigen Testergebnisse in einer Mediandarstellung. Der Medianwert zeigt an wo sich die Mehrzahl der Werte befindet. Zusätzlich sind die Mittelwerte, visualisiert durch ein Kreuz, dargestellt. Die dünne schwarze Linie zeigt den maximalen Grenzwert der Brandvorschrift an und die graue Linie die Zwei-Drittel-Grenze. Es sind für jede der drei Lederarten A1, A2, A3 und im Vergleich für die neutrale Trägerprobe B jeweils die Nachbrennzeiten T in Sekunden und die Brandlängen L in Millimetern dargestellt.

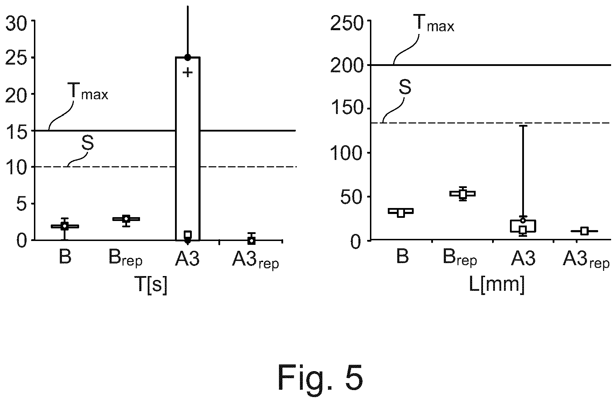

Für das untersuchte Reparaturverfahren sind in Figur 3 die Nachbrenndauern T und die Brandlängen L der neutralen Trägerprobe B, der mit dem untersuchten Reparaturverfahren reparierten neutralen Trägerprobe B_rep, der ersten Originalprobe A1 und der mit dem Reparaturverfahren reparierten Originalprobe A1_rep (von links nach rechts) dargestellt. Figuren 4 und 5 zeigen analog die weiteren untersuchten Proben mit Lederarten A2, A2_rep und A3, A3_rep.

Figur 3 zeigt, dass die Werte der Nachbrenndauern T und der Brandlängen L der einzelnen Proben B, A1 sich nicht signifikant unterschiedlich im Vergleich zu den reparierten Proben B_rep, A1_rep verhalten. Zudem liegen alle Werte unterhalb der durch den Sicherheitswert S=1,5 festgelegten Zwei-Drittel-Grenze. Figur 4 zeigt, dass die Werte der Nachbrenndauern T und der Brandlängen L der einzelnen Proben B, A2 sich nicht signifikant unterschiedlich im Vergleich zu den reparierten Proben B_rep, A2_rep verhalten. Lediglich die Proben mit der reparierten Oberfläche A2_rep zeigen eine große Varianz in den Messwerten der Nachbrenndauer T. Jedoch liegen alle Mittelwerte unterhalb der durch den Sicherheitswert S=1,5 festgelegten Zwei-Drittel-Grenze. Figur 5 zeigt, dass die Werte der Nachbrenndauern T und der Brandlängen L der einzelnen Proben B, A3 sich nicht signifikant unterschiedlich im Vergleich zu den reparierten Proben B_rep, A3_rep verhalten. Nur die Probe A3, mit der für die Verwendung in Flugzeugkabinen zugelassenen Lederart 3 im Original, also ohne Reparatur, zeigt eine große Varianz, die zum Teil auch die maximale erlaubte Nachbrenndauer T_max überschreitet. Hier hat die Anwendung des Reparaturverfahrens jedoch eine sehr positive Auswirkung, da die Nachbrennzeiten T der reparierten Probe A3_rep verschwindend gering sind. Zudem liegen alle Medianwerte unterhalb der durch den Sicherheitswert S=1,5 festgelegten Zwei-Drittel-Grenze.

Demzufolge zeigen alle drei Lederarten, die sich sowohl untereinander, als auch innerhalb der einzelnen Lederarten stark in Farbe und Struktur unterscheiden, als Repräsentanten der Materialgruppe "Leder", dass sich das Brandverhalten mit Anwendung des getesteten Reparaturverfahrens nicht verschlechtert. Dementsprechend kann nach diesem allgemeinen Brandtest BT_allg angenommen werden, dass das untersuchte Reparaturverfahren R nicht das Brandverhalten der gesamten Oberflächenmaterialgruppe "Leder" verschlechtert und für diesen Anwendungsfall brandqualifiziert ist. Im Folgenden kann das Reparaturverfahren völlig ohne weitere Brandtests von reparierten Originalbauteilen bei weiteren Flugzeugen angewendet werden.

## Patentansprüche

1. Qualifizierungsverfahren für Oberflächenreparaturverfahren für eine Oberflächenmaterialgruppe von Kabinenbauteilen, das Qualifizierungsverfahren umfasst die folgenden Schritte:
- Bereitstellung von mindestens zwei Originalproben (A) mit mindestens einem Repräsentanten der untersuchten Oberflächenmaterialgruppe (MG) und
- mindestens zwei Proben (B) mit einem neutralen Trägerwerkstoff,
- Anwendung des zu qualifizierenden Reparaturverfahrens (R) auf eine Originalprobe (A_rep) und eine neutrale Trägerprobe (B_rep),
- Durchführen eines standardisierten Brandtests (BT) mit jeder Probe (A, A_rep, B, B_rep),
- Analysieren des Brandtests (BT), wobei das Reparaturverfahren (R) qualifiziert wird, wenn
- das Brandverhalten der Proben (A, A_rep, B, B_rep) die Vorgaben des standardisierten Brandtests (BT) erfüllt und
- das Brandverhalten der reparierten Proben (A_rep, B_rep), also die im Rahmen des standardisierten Brandtests (BT) gemessene Nachbrennzeiten (T) und die Brandlängen (L), sich um nicht mehr als 20 Prozent im Vergleich zu den unreparierten Proben (A, B) verlängern.

2. Verfahren nach Anspruch 1, **dadurch gekennzeichnet, dass** Probensätze, gebildet aus mehreren identischen Proben (A, B, A_rep, B_rep) dem Brandtest (BT) unterzogen werden und dass die Qualifizierung auf einer statistischen Auswertung der Testergebnisse für die Probensätze beruht.

3. Verfahren nach Anspruch 1 oder 2, **dadurch gekennzeichnet, dass** als neutraler Trägerwerkstoff ein Glaslaminat verwendet wird.

4. Verfahren nach Anspruch 3, **dadurch gekennzeichnet, dass** das Glaslaminat ein Glasgewebe mit Phenolharz umfasst.

5. Verfahren nach Anspruch 4, **dadurch gekennzeichnet, dass** das Glaslaminat einen Harzanteil von 40 % und eine Flächenmasse von 470 bis 510 g/m² aufweist.

6. Verfahren nach einem der Ansprüche 1 bis 5, wobei der standardisierte Brandtest (BT) eine maximal erlaubte Nachbrenndauer (T_max) und eine maximale erlaubte Brandlänge (L_max) definiert, **dadurch gekennzeichnet dass** das Reparaturverfahren (R) brandqualifiziert wird, wenn -die im Rahmen des Brandtest (BT) gemessene Nachbrennzeit T der Probe und Brandlänge L der Probe den Wert T_max geteilt durch einen Sicherheitswert (S) und Lmax geteilt durch einen Sicherheitswert (S) nicht überschreitet, wobei ein Sicherheitswert (S) zwischen 1,2 und 2,0 liegt.

7. Verfahren nach Anspruch 6, **dadurch gekennzeichnet, dass** der Sicherheitswert (S) zwischen 1,4 und 1,6 liegt.

8. Verfahren nach Anspruch 7, **dadurch gekennzeichnet, dass** der Sicherheitswert (S) 1,5 beträgt.

## Claims

1. Qualification method for surface repair methods for a surface material group of cabin components, the qualification method comprises the following steps:
- providing at least two original samples (A) comprising at least one representative of the examined surface material group (MG) and
- at least two samples (B) comprising a neutral carrier material,
- applying the repair method (R) to be qualified to an original sample (A_rep) and a neutral carrier sample (B_rep),
- performing a standardized fire test (BT) using each sample (A, A_rep, B, B_rep),
- analyzing the fire test (BT), wherein the repair method (R) is qualified if
- the fire behavior of the samples (A, A_rep, B, B_rep) satisfies the specifications of the standardized fire test (BT), and
- the fire behavior of the repaired samples (A_rep, B_rep), i.e. the afterflame times (T) measured in the context of the standardized fire test (BT) and the fire lengths (L), are extended by no more than 20 percent compared to the unrepaired samples (A, B).

2. Method according to claim 1, **characterized in that** sample sets formed of a plurality of identical samples (A, B, A_rep, B_rep) are subjected to the fire test (BT), and **in that** the qualification is based on a statistical evaluation of the test results for the sample sets.

3. Method according to either claim 1 or claim 2, **characterized in that** a glass laminate is used as the neutral carrier material.

4. Method according to claim 3, **characterized in that** the glass laminate comprises a glass fabric comprising phenolic resin.

5. Method according to claim 4, **characterized in that** the glass laminate has a resin fraction of 40% and a mass per unit area of 470 to 510 g/m².

6. Method according to any of claims 1 to 5, the standardized fire test (BT) defining a maximum permitted afterflame duration (T_max) and a maximum permitted fire length (L_max), **characterized in that** the repair method (R) is fire-qualified if
- the afterflame time T of the sample and the fire length L of the sample measured within the context of the fire test (BT) does not exceed the value T_max divided by a safety value (S) and Lmax divided by a safety value (S), a safety value (S) being between 1.2 and 2.0.

7. Method according to claim 6, **characterized in that** the safety value (S) is between 1.4 and 1.6.

8. Method according to claim 7, **characterized in that** the safety value (S) is 1.5.

## Revendications

1. Procédé de qualification pour procédés de réparation de surface pour un groupe de matériaux de surface de composants de cabine, le procédé de qualification comprenant les étapes suivantes :
- préparation d'au moins deux échantillons originaux (A) avec au moins un représentant du groupe de matériaux de surface (MG) examiné et
- au moins deux échantillons (B) avec un matériau de support neutre,
- utilisation du procédé de réparation (R) à qualifier sur un échantillon original (A rep) et un échantillon de support (B_rep) neutre,
- exécution d'un essai au feu (BT) normalisé avec chaque échantillon (A, A_rep, B, B_rep),
- analyse de l'essai au feu (BT), le procédé de réparation (R) étant qualifié lorsque
- le comportement au feu des échantillons (A, A rep, B, B rep) satisfait aux critères de l'essai au feu (BT) normalisé et
- le comportement au feu des échantillons réparés (A rep, B rep), c'est-à-dire les durées de persistance de flamme (T) et longueurs brûlées (L) mesurées dans le cadre de l'essai au feu (BT) normalisé, ne s'allongent pas de plus de 20 pour cent par rapport aux échantillons (A, B) non réparés.

2. Procédé selon la revendication 1, **caractérisé en ce que** des jeux d'échantillons, formés à partir de plusieurs échantillons identiques (A, B, A rep, B rep) sont soumis à l'essai au feu (BT) et **en ce que** la qualification repose sur une évaluation statistique des résultats de l'essai pour les jeux d'échantillons.

3. Procédé selon la revendication 1 ou 2, **caractérisé en ce qu'**un stratifié de verre est utilisé comme de matériau de support neutre.

4. Procédé selon la revendication 3, **caractérisé en ce que** le stratifié de verre comprend un tissu de verre avec de la résine phénolique.

5. Procédé selon la revendication 4, **caractérisé en ce que** le stratifié de verre présente une teneur en résine de 40 % et une masse surfacique de 470 à 510 g/m².

6. Procédé selon l'une des revendications 1 à 5, dans lequel l'essai au feu (BT) normalisé définit une durée de persistance de flamme maximale admissible (T_max) et une longueur brûlée maximale admissible (L_max), **caractérisé en ce que** le procédé de réparation (R) est qualifié au feu lorsque
- la durée de persistance de flamme T de l'échantillon et la longueur brûlée L de l'échantillon mesurées dans le cadre de l'essai au feu (BT) ne dépassent pas la valeur T_max divisée par une valeur de sécurité (S) et Lmax divisée par une valeur de sécurité (S), une valeur de sécurité (S) étant comprise entre 1,2 et 2,0.

7. Procédé selon la revendication 6, **caractérisé en ce que** la valeur de sécurité (S) est comprise entre 1,4 et 1,6.

8. Procédé selon la revendication 7, **caractérisé en ce que** la valeur de sécurité (S) est de 1,5.
